# EUROPÄISCHE PATENTSCHRIFT

(11) **EP 3 369 628 B1**
(45) Veröffentlichungstag und Bekanntmachung des Hinweises auf die Patenterteilung: **24.07.2019**
(21) Anmeldenummer: 17158969.0
(22) Anmeldetag: 02.03.2017
(51) Int. Cl.: B60R 21/20

(54) **VERBINDUNGSANORDNUNG ZUM VERBINDEN EINES EINEN AUSLÖSBAREN AIRBAG AUFNEHMENDEN AIRBAG-MODULS MIT EINEM TRÄGERELEMENT EINES FAHRZEUGS**
CONNECTING ARRANGEMENT OF AN AIRBAG MODULE HOUSING A DEPLOYING AIRBAG WITH A FRAME ELEMENT OF A VEHICLE
CONNECTION D'UN MODULE DE SAC GONFLABLE ET UN CHASSIS DE VÉHICULE

(43) Veröffentlichungstag der Anmeldung: 05.09.2018
(73) Patentinhaber: SMP Deutschland GmbH, 79268 Bötzingen (DE)
(72) Erfinder: Wanitschke, Michael, 93326 Abensberg (DE); Schweiger, Franz, 93326 Abensberg (DE); Hoffmann, Jan, 96047 Bamberg (DE); Verseghy, Gustav, 93342 Mitterfecking (DE)
(74) Vertreter: Westphal, Mussgnug & Partner Patentanwälte mbB

(56) Entgegenhaltungen:
- EP-A2- 0 771 696
- DE-A1-102007 054 506
- GB-A- 507 249

## Beschreibung

Die vorliegende Erfindung betrifft eine Verbindungsanordnung zum Verbinden eines einen auslösbaren Airbag aufnehmenden Airbag-Moduls mit einem Trägerelement eines Fahrzeugs sowie ein Dämpfungselement zur Verwendung in einer derartigen Verbindungsanordnung.

In modernen Fahrzeugen wie Kraftfahrzeugen ist eine zunehmende Anzahl von Airbags verbaut, welche im Falle eines Aufpralls des Fahrzeugs gegen einen stationären oder sich bewegenden Gegenstand, häufig ein anderes Fahrzeug, auslösen, um die Insassen vor Verletzungen zu schützen. Airbags sind in Airbag-Modulen in einem zusammengefalteten Zustand angeordnet und werden im Falle eines Aufpralls dadurch ausgelöst, dass sie mittels Gasgeneratoren explosionsartig aufgeblasen werden. Die Airbag-Module sind beispielsweise im Falle von Seiten- und Kopfairbags vom Innenraum des Fahrzeugs gesehen hinter Verkleidungselementen und im Falle von Frontairbags hinter der Instrumententafel bzw. dem Armaturenbrett angeordnet. Die Instrumententafel ist mittels eines Modulquerträgers an der Karosserie des Fahrzeugs befestigt.

Damit sich der Airbag wunschgemäß aufbläst, sind zwischen den Airbag-Modulen und insbesondere den Instrumententafeln Schusskanäle vorgesehen, welche den Airbag beim Auslösen führen. Die Verkleidungselemente und die Instrumententafeln weisen Sollbruchstellen auf, an welchen sich die Verkleidungselemente und die Instrumententafeln öffnen, wenn der Airbag beim Auslösen von der Rückseite auftrifft.

Das Airbag-Modul ist üblicherweise mit einem Schusskanal verschraubt, der den Airbag beim Auslösen führt, während der Schusskanal mit der Instrumententafel verschweißt oder verklipst ist. Eine derartige Anordnung ist aus der DE 10 2007 053 996 A1 bekannt. Weiterhin sind die Schusskanäle an der Instrumententafel durch Verschweißen oder andere Fügeprozesse befestigt. Alternativ können die Instrumententafel und der Schusskanal als ein einstückiges Bauteil ausgeführt sein und im Spritzgussprozess gefertigt werden.

Beim Auslösen stützt sich der Airbag gegen das Airbag-Modul ab. Aufgrund der oben beschriebenen explosionsartigen Auslösung wirken kurzzeitig hohe Kräfte auf das Airbag-Modul. Diese Kräfte werden dadurch verstärkt, dass der Airbag die Instrumententafel an den Sollbruchstellen öffnen muss.

Insbesondere aufgrund von steigenden Sicherheitsanforderungen nimmt das Volumen der Airbags immer mehr zu, so dass Airbag-Volumina bis 140 L keine Seltenheit sind. Mit der Zunahme des Volumens der Airbags werden die Gasgeneratoren größer und stärker, da sie das erhöhte Airbag-Volumen ohne Zeitverlust aufblasen müssen. Folglich weisen die Gasgeneratoren eine größere Ladung in Form von Sprengstoff auf.

Entsprechend hoch sind die zukünftigen Anforderungen bei der Entwicklung eines Airbag-Systems. Wie bereits erwähnt, erfordern Airbag-Volumina bis zu 140 L größere Gasgeneratoren im Airbag-Modul, die wiederum mehr Ladung bzw. mehr Treibgase für die Füllung des Airbags benötigen. Eine erhöhte Ladung des Gasgenerators bedeutet eine größere Aussetzung von Treibgasen, die wiederum die Reaktionskraft des Airbag-Moduls erhöhen, wodurch die Schnittstelle an der Verschweißung zwischen dem Schusskanal und der Instrumententafel stärker belastet wird.

Weiterhin können beim Auslösen des Airbags aufgrund der oben beschriebenen Beschädigungen Teile der Instrumententafel abbrechen und in den Innenraum gelangen, wo sie die Insassen gefährden können. Verbindungsanordnungen zwischen einem Airbag-Modul und einem Trägerelement eines Fahrzeugs sind beispielsweise in der EP 0 771 696 A2 und der DE 2007 054 506 A1 offenbart.

Aufgabe einer Ausführungsform der vorliegenden Erfindung ist es, den oben genannten Nachteilen zu begegnen und eine kostengünstige Verbindungsanordnung zum Verbinden eines einen auslösbaren Airbag aufnehmenden Airbag-Moduls mit einem Trägerelement eines Fahrzeugs anzugeben, mit welcher das Trägerelement beim Auslösen des Airbags nicht beschädigt wird. Zudem soll die Bildung von Rissen und Brüchen insbesondere an den Verbindungsstellen zwischen den Schusskanälen und der Instrumententafel wie auch die hieraus resultierende Bildung von Partikeln verhindert werden.

Diese Aufgabe wird mit den in den Ansprüchen 1 und 9 angegebenen Merkmalen gelöst. Vorteilhafte Ausführungsformen sind Gegenstand der Unteransprüche.

Eine Ausführungsform der Erfindung betrifft eine Verbindungsanordnung zum Verbinden eines einen auslösbaren Airbag aufnehmenden Airbag-Moduls mit einem Trägerelement eines Fahrzeugs, umfassend eine Zugstange, ein mit dem Airbag-Modul und der Zugstange zusammenwirkendes erstes Kraftübertragungselement, ein mit dem Trägerelement und der Zugstange zusammenwirkendes zweites Kraftübertragungselement, wobei die Zugstange und das erste und das zweite Kraftübertragungselement zum Verbinden des Airbag-Moduls mit dem Trägerelement angeordnet sind, und zumindest ein verformbares Dämpfungselement, welches mit der Zugstange, dem ersten Kraftübertragungselement und/oder dem zweiten Kraftübertragungselement zum Absorbieren der zwischen dem Airbag-Modul und dem Trägerelement wirkenden Kräfte zusammenwirkt.

Wie eingangs erörtert, werden die Airbag-Module von Frontairbags üblicherweise an Schusskanälen befestigt, so dass in diesem Fall die Schusskanäle und/oder die mit den Schusskanälen verbundene Instrumententafel die Trägerelemente darstellen. Wie erwähnt, können die Schusskanäle an der Instrumententafel durch Verschweißen oder andere Fügeprozesse befestigt sein. Alternativ können die Instrumententafel und der Schusskanal als ein einstückiges Bauteil ausgeführt sein und im Spritzgussprozess gefertigt werden. Bei Kopf- und Seitenairbags können die Airbag-Module auf andere Weise im Fahrzeug befestigt sein, so dass dann anstelle der Schusskanäle und der Instrumententafeln andere Bauteile als Trägerelemente dienen.

Wie ebenfalls eingangs erläutert, wirken beim Auslösen des Airbags hohe Kräfte auf das Airbag-Modul. Je weniger die Schnittstelle Schusskanal/Instrumententafelträger von Kräften, die vom Airbag-Modul ausgehen, belastet wird, desto geringer werden die Entwicklungskosten. Die Airbag-Module sind üblicherweise so an den Trägerelementen befestigt, dass die Verbindung zwischen den Trägerelementen und den Airbag-Modulen auf Zug belastet wird. Bei der vorliegenden Verbindungsanordnung werden die Zugbelastungen von der Zugstange aufgenommen, die beispielsweise aus Stahl gefertigt sein kann. Die Zugstangen sind im Ausgangszustand stabförmig und werden durch eine entsprechende Durchgangsöffnung des Airbag-Moduls und des Trägerelements geführt. Wie in der DE 10 2007 053 996 A1 offenbart, können die Durchgangsöffnungen in Flanschen angeordnet sein, wobei auch andere Befestigungsgestaltungen möglich sind. Um aber die zwischen dem Airbag-Modul und dem Trägerelement wirkenden Kräfte auf die Zugstange übertragen zu können, sind Kraftübertragungselemente notwendig. Kraftübertragungselemente können als Anlageflächen aufgefasst werden, an denen sich das Airbag-Modul und das Trägerelement anliegen, wenn sie miteinander verbunden sind. Die Kraftübertragungselemente können beispielsweise als Splinte ausgeführt sein, die in senkrecht zur Längsachse der Zugstange und innerhalb dieser verlaufende Bohrungen angeordnet sind und auf geeigneten Oberflächen des Airbag-Moduls und des Trägerelements aufliegen. In diesem Fall erfolgt die Kraftübertragung mittels eines von den Splinten bereitgestellten Formschlusses.

Die beim Auslösen des Airbags auftretenden Kräfte versuchen, das Airbag-Modul und das Trägerelement voneinander weg zu bewegen. Das vorschlagsgemäße Dämpfungselement, welches mit der Zugstange, dem ersten Kraftübertragungselement und/oder dem zweiten Kraftübertragungselement zusammenwirkt, absorbiert die beim Auslösen des Airbags zwischen dem Airbag-Modul und dem Trägerelement wirkenden Kräfte zumindest soweit, dass die Belastungen auf das Trägerelement soweit reduziert werden, dass dieses durch das Auslösen des Airbags oder infolge der Vibrationen im Betrieb des Fahrzeugs nicht beschädigt wird. Üblicherweise ist das Dämpfungselement so angeordnet, dass die wirkenden Kräfte vom Airbag-Modul und dem Trägerelement über die Kraftübertragungselemente derart auf das Dämpfungselement übertragen werden, dass das Dämpfungselement auf Druck beansprucht wird. Infolge dieser Druckbeanspruchung werden das Dämpfungselement gestaucht und folglich die zwischen dem Airbag-Modul und dem Trägerelement wirkenden Kräfte bzw. die beim Auslösen wirkende Energie in Verformungsenergie umwandelt und vom Dämpfungselement absorbiert. Der absorbierte Anteil der Zugkräfte wirkt nicht mehr auf das Trägerelement, welches infolge des Auslösens des Airbags nicht mehr beschädigt wird. Nach dem Auslösen müssen daher nur das Dämpfungselement und das Airbag-Modul ausgetauscht werden, was wesentlich kostengünstiger und zeitsparender ist als der zusätzliche Austausch eines beschädigten Trägerelements.

Das Dämpfungselement absorbiert nur Energie, wenn der Airbag ausgelöst wird. Die Entwicklung können beschleunigt und die Entwicklungskosten gesenkt werden. Zudem wird eine praktikable Lösung angegeben, um die erhöhten Anforderungen, die insbesondere im erhöhten Airbag-Volumen begründet sind, zu erfüllen.

Risse und Brüche während des Auslösens des Airbags werden reduziert, da aufgrund der Verwendung des Dämpfungselements weniger Kräfte im Schusskanal bzw. im Instrumententafelträger wirken.

Gemäß einer ersten Alternative der erfindungsgemäßen Verbindungsanordnung ist das Dämpfungselement als eine die Zugstange umschließende Hülse ausgeführt. In dieser Ausführungsform ist das Dämpfungselement sehr einfach ausgestaltet, so dass eine handelsübliche Hülse verwendet werden kann. Dabei kann das Material und die Wandstärke der Hülse so gewählt werden, dass die auftretenden Kräfte in ausreichendem Maß absorbiert werden können. Beispielsweise kann die Hülse aus einem elastischen Kunststoff oder einem gummiartigen Material gefertigt sein.

Dabei weist die Hülse eine Wandung auf, welche eine oder mehrere Durchbrüche und/oder Ausnehmungen umfasst. Im Rahmen der vorliegenden Beschreibung sollen die Durchbrüche so verstanden werden, dass sie die Wandung vollständig durchlaufen, wohingegen die Ausnehmungen Vertiefungen in der Wandung darstellen, welche die Wandung nicht vollständig durchlaufen. Die Verwendung von Durchbrüchen und Ausnehmungen ermöglicht es, das Verformungsverhalten der Hülse gezielt zu beeinflussen. Mit der Anzahl und der Größe der Durchbrüche und der Ausnehmungen kann die Hülse auf relativ einfache Weise auf die zu absorbierenden Kräfte angepasst werden, so dass das Trägerelement insbesondere beim Auslösen des Airbags nicht beschädigt wird. Weiterhin kann gezielt gewählt werden, wo die hauptsächliche Verformung innerhalb des Dämpfungselements stattfindet. Auch hierdurch können Beschädigungen des Trägerelements vermieden werden.

Nach einer zweiten Alternative der erfindungsgemäßen Verbindungsanordnung weist das Dämpfungselement eine die Zugstange umschließende kugelförmigen Dämpfungskörper und eine an diesem anliegende oder befestigte, die Zugstange umschließende Verformungsscheibe auf. Damit der Dämpfungskörper und die Verformungsscheibe die Zugstange umschließen können, weisen diese beispielsweise jeweils eine Durchgangsöffnung auf, durch welche die Zugstange durchgeführt wird. Beim Auslösen des Airbags legt sich die Verformungsscheibe an die Oberfläche des kugelförmigen Dämpfungskörpers an und verformt sich entsprechend. Auch diese Ausführungsform lässt sich mit handelsüblichen Bauteilen auf einfache Weise realisieren.

In einer dritten Alternative der erfindungsgemäßen Verbindungsanordnung weist das Dämpfungselement eine die Zugstange umschließende erste Scheibe und eine die Zugstange umschließende zweite Scheibe auf, wobei die erste und die zweite Scheibe mit einer Anzahl von Stegen verbunden sind. Mit der Anzahl und den Abmessungen der Stege lässt sich das Verformungsverhalten auf einfache Weise gezielt steuern und an den jeweiligen Anwendungsfall anpassen. Zudem eignet sich diese Ausführungsform besonders dazu, mehrere Dämpfungselemente hintereinander in Reihe anzuordnen, da die Scheiben die wirkenden Kräfte gut übertragen und weiterleiten können.

Eine weitergebildete Ausführungsform zeichnet sich dadurch aus, dass das erste Kraftübertragungselement und das zumindest eine Dämpfungselement oder das zweite Kraftübertragungselement und das zumindest eine Dämpfungselement zu einem Bauteil zusammengefasst sind oder das erste Kraftübertragungselement und ein erstes Dämpfungselement sowie das zweite Kraftübertragungselement und ein zweites Dämpfungselement zu jeweils einem Bauteil zusammengefasst sind. Das Bauteil, welches das Kraftübertragungselement und das Dämpfungselement vereint, weist erste Abschnitte, die zur Kraftübertragung mit der Zugstange dienen, beispielsweise Bolzen oder Stifte, und zweit Abschnitte auf, die zum Absorbieren der zwischen dem Airbag-Modul und dem Trägerelement wirkenden Kräfte dienen, beispielsweise am ersten Abschnitt befestigte Federn. Das Zusammenfassen der Dämpfungselemente und der Kraftübertragungselemente zu einem Bauteil hat logistische Vorteile, da nicht zwei separate Elemente bevorratet werden müssen. Weiterhin wird die Montagesicherheit erhöht, da ausgeschlossen werden kann, dass eines der Elemente nicht montiert wird.

Bei einer weitergebildeten Ausführungsform kann die Zugstange ein Außengewinde und die Hülse ein zum Außengewinde korrespondierendes Innengewinde aufweisen, wobei das Innengewinde beabstandet von den Durchbrüchen und/oder Ausnehmungen angeordnet ist. In diesem Fall kann die Zugstange als eine handelsübliche Gewindestange ausgeführt werden, auf welche die Hülse aufgeschraubt werden kann. Hierdurch kann die Fertigung der Verbindungsanordnung vereinfacht werden, da die Hülse auf der Zugstange vorpositioniert werden kann. Über die Gewindeverbindung zwischen der Zugstange und der Hülse wirkt die Hülse selbst als ein Kraftübertragungselement, so dass kein weiteres Kraftübertragungselement vorgesehen werden muss, wodurch die Anzahl der benötigten Teile reduziert werden kann. Dadurch, dass das Innengewinde beabstandet von den Ausnehmungen und/oder Durchbrüchen angeordnet ist, ist der Bereich, innerhalb welchem die Kräfte von der Zugstange in das Dämpfungselement eingeleitet wird, räumlich getrennt vom Bereich, in welchem sich das Dämpfungselement verformt. Hierdurch werden störende Einflüsse auf das Dämpfungsverhalten vermieden und die Kraftübertragung durch das Verformen nicht unterbrochen.

Bei einer weiteren Ausführungsform kann die Zugstange als eine Schraube mit einem Außengewinde und einem als Schraubenkopf ausgebildeten ersten Kraftübertragungselement ausgeführt sein, wobei die Hülse ein zum Außengewinde korrespondierendes Innengewinde aufweist und das Innengewinde beabstandet von den Durchbrüchen und/oder Ausnehmungen angeordnet ist. Im Rahmen der vorliegenden Anmeldung sollen Schrauben als eine Kombination aus einer Zugstange und eine Kraftübertragungselement aufgefasst werden. Während der Schraubenschaft einer mit einem Gewinde versehenen Zugstange entspricht, entspricht der Schraubenkopf dem Kraftübertragungselement, welcher die Anlagefläche für das Airbag-Modul oder das Trägerelement bereitstellt.

Schrauben sind ein sehr häufig verwendetes Verbindungselement, um zwei Bauteile miteinander zu verbinden. Der Schraubenkopf wirkt als Kraftübertragungselement, so dass kein weiteres Kraftübertragungselement vorgesehen werden muss. Dadurch, dass die Hülse auf die Schraube aufschraubbar ist, wirkt auch diese als Kraftübertragungselement, so dass die Anzahl der Bauteile weiter reduziert werden kann. Dadurch, dass das Innengewinde beabstandet von den Ausnehmungen und/oder Durchbrüchen angeordnet ist, ist der Bereich, innerhalb welchem die Kräfte von der Zugstange in das Dämpfungselement eingeleitet wird, räumlich getrennt vom Bereich, in welchem sich das Dämpfungselement verformt. Hierdurch werden störende Einflüsse auf das Dämpfungsverhalten vermieden und die Kraftübertragung durch das Verformen nicht unterbrochen.

Eine weitere Ausführungsform zeichnet sich dadurch aus, dass die Stege in Bezug auf die erste Scheibe und die zweite Scheibe geneigt verlaufen. Wie bereits erwähnt, können die Dämpfungselemente so angeordnet werden, dass sie auf Druck beansprucht werden. Aufgrund der geneigten Anordnung knicken die Stege bei Druckbeanspruchung schnell weg, so dass ein gutes Dämpfungs- und Verformungsverhalten bereitgestellt werden kann.

Eine weitere Ausführungsform ist dadurch gekennzeichnet, die Zugstange ein Gewinde aufweist und das erste und zweite Kraftübertragungselement als Muttern oder Gewindebuchsen ausgeführt sind. In dieser Ausführungsform kann die Zugstange als handelsübliche Gewindestange ausgeführt werden. Auch die Muttern oder Gewindebuchsen sind handelsübliche Bauteile, so dass die Verbindungsanordnung auf kostengünstige Weise bereitgestellt werden kann. In dieser Ausführungsform benötigt das Dämpfungselement selbst kein eigenes Gewinde, was die Fertigung des Dämpfungselements ebenfalls einfach hält.

In einer weiteren Ausführungsform kann die Zugstange als eine Schraube mit einem Außengewinde und einem als Schraubenkopf ausgebildeten ersten Kraftübertragungselement und das zweite Kraftübertragungselement als Mutter oder Gewindebuchse ausgeführt sein. Schrauben sind in einer Vielzahl von Varianten kostengünstig verfügbar, so dass diese für den Anwendungsfall gezielt ausgewählt werden können. Da der Schraubenkopf als ein Kraftübertragungselement wirkt, ist kein zusätzliches Kraftübertragungselement notwendig, was die Anzahl der Bauteile reduziert.

Bei einer weiteren Ausführungsform weist die Zugstange ein Außengewinde auf oder ist als eine Schraube mit einem Außengewinde ausgeführt, wobei das erste Kraftübertragungselement als eine mit dem Dämpfungselement zusammenwirkende Ausbuchtung der Zugstange und das zweite Kraftübertragungselement als Mutter ausgeführt sind. In diesem Fall ist das erste Kraftübertragungselement in der Schraube oder der Gewindestange angeordnet, so dass insbesondere im Falle der Gewindestange keine weiteren Kraftübertragungselemente vorgesehen werden müssen. Je nach Stärke der Beanspruchung und den Einbauverhältnissen kann es sein, dass nur vergleichsweise klein dimensionierte Schrauben eingesetzt werden können, deren Schraubenköpfe nur eine begrenzte Kraft übertragen und bei den auftretenden Beanspruchungen vom Schraubenschaft abreißen können. In diesem Fall kann das Kraftübertragungselement direkt als Ausbuchtung an der Zugstange angeordnet und so dimensioniert werden, dass die auftretenden Belastungen sicher aufgenommen werden können.

Eine Ausgestaltung der Erfindung betrifft ein Dämpfungselement zur Verwendung in einer Verbindungsanordnung nach einem der vorherigen Ausführungsformen zum Verbinden eines einen auslösbaren Airbag aufnehmenden Airbag-Moduls mit einem Trägerelement eines Fahrzeugs, wobei das Dämpfungselement
- als eine Hülse mit einer Wandung ausgebildet ist, welche eine oder mehrere Durchbrüche und/oder Ausnehmungen aufweist, oder
- als eine Hülse mit einer Wandung ausgebildet ist, welche eine oder mehrere Durchbrüche und/oder Ausnehmungen und die Hülse ein Innengewinde aufweist, wobei das Innengewinde beabstandet von den Durchbrüchen und/oder Ausnehmungen angeordnet ist, oder
- einen kugelförmigen Dämpfungskörper und eine an dieser anliegende oder befestigte Verformungsscheibe aufweist, die jeweils eine Durchgangsöffnung aufweisen, oder
- eine erste Scheibe und eine zweite Scheibe mit jeweils einer Durchgangsöffnung aufweist, wobei die erste und die zweite Scheibe mit einer Anzahl von Stegen verbunden sind.

Die technischen Effekte und Vorteile, die sich mit dem vorschlagsgemäßen Dämpfungselement erreichen lassen, entsprechen denjenigen, die für die vorliegende Verbindungsanordnung erörtert worden sind. Zusammenfassend sei darauf hingewiesen, dass es mit diesem Dämpfungselement möglich ist, ein Airbag-Modul an einem Trägerelement so zu befestigen, dass das Trägerelement beim Auslösen des Airbags nicht beschädigt wird.

Beispielhafte Ausführungsformen der Erfindung werden im Folgenden unter Bezugnahme auf die beigefügten Zeichnungen näher erläutert. Es zeigen
- Figur 1: ein erstes Ausführungsbeispiel einer erfindungsgemäßen Verbindungsanordnung,
- Figur 2: ein zweites Ausführungsbeispiel der erfindungsgemäßen Verbindungsanordnung, jeweils anhand einer prinzipiellen Darstellung,
- Figur 3: ein erstes Ausführungsbeispiel eines erfindungsgemäßen Dämpfungselements anhand einer prinzipiellen Darstellung,
- Figur 4: das in Figur 3 gezeigte Ausführungsbeispiel des Dämpfungselements um 90° um die Längsachse gedreht,
- Figur 5: ein zweites Ausführungsbeispiel des erfindungsgemäßen Dämpfungselements,
- Figur 6: ein drittes Ausführungsbeispiel eines erfindungsgemäßen Dämpfungselement,
- Figur 7: ein viertes Ausführungsbeispiel des erfindungsgemäßen Dämpfungselements,
- Figur 8: ein Ausführungsbeispiel des erfindungsgemäßen Dämpfungselements,
- Figur 9: ein fünftes Ausführungsbeispiel des erfindungsgemäßen Dämpfungselements,
- Figur 10: ein sechstes Ausführungsbeispiel des erfindungsgemäßen Dämpfungselements,
- Figuren 11a) - 11f): weitere Ausführungsbeispiele der erfindungsgemäßen Verbindungsanordnung, jeweils anhand einer prinzipiellen Darstellung.

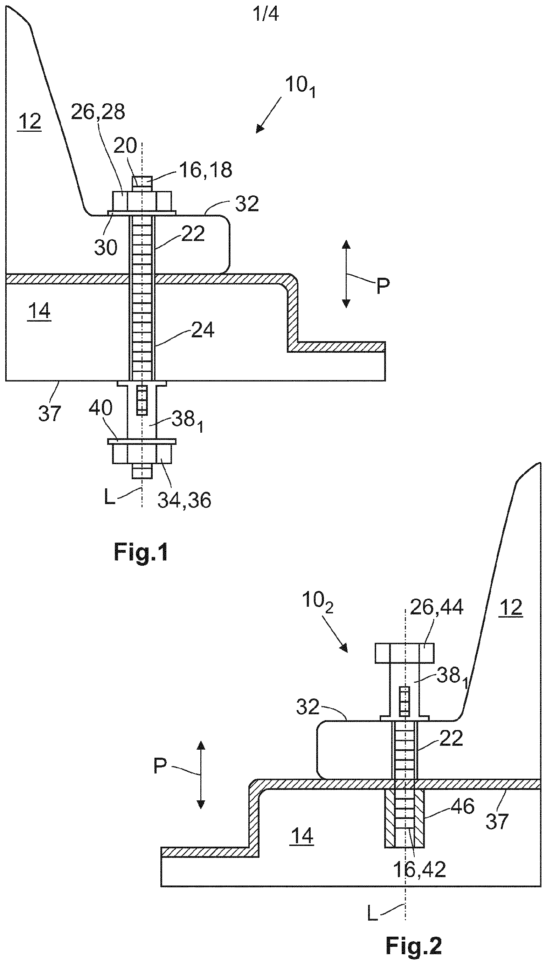

In Figur 1 ist ein erstes Ausführungsbeispiel einer erfindungsgemäßen Verbindungsanordnung 10₁ zum Verbinden eines einen nicht dargestellten auslösbaren Airbag aufnehmenden Airbag-Moduls 12 mit einem Trägerelement 14 eines ebenfalls nicht dargestellten Fahrzeugs anhand einer Prinzipskizze dargestellt. Das Trägerelement 14 kann insbesondere ein Schusskanal sein, welcher mit einen nicht dargestellten Modulquerträger verbunden ist. Weiterhin kann das Trägerelement 14 auch eine nicht dargestellte Instrumententafel und den hieran befestigten Schusskanal umfassen. Das Trägerelement 14 kann auch der Modulquerträger selbst sein. Die Verbindungsanordnung 10₁ umfasst eine Zugstange 16, welche im ersten Ausführungsbeispiel als eine Gewindestange 18 mit einem Außengewinde 20 ausgeführt ist und eine Längsachse L aufweist. Das Airbag-Modul 12 weist eine erste Durchgangsbohrung 22 auf, welche zum Verbinden mit einer zweiten Durchgangsbohrung 24 des Trägerelements 14 zur Deckung gebracht wird. Die Zugstange 16 ist durch die erste und die zweite Durchgangsbohrung 22, 24 durchgeführt.

Weiterhin weist die Verbindungsanordnung 10₁ ein erstes Kraftübertragungselement 26 auf, welches als eine erste Mutter 28 ausgeführt und auf die Zugstange 16 aufgeschraubt ist. Die erste Mutter 28 wirkt über eine erste Unterlegscheibe 30 mit dem Airbag-Modul 12 so zusammen, dass Kräfte vom Airbag-Modul 12 auf die Zugstange 16 übertragen werden können. Die erste Unterlegscheibe 30 liegt dabei an einer im Wesentlichen senkrecht zur Längsachse L der Zugstange 16 verlaufenden ersten Oberfläche 32 des Airbag-Moduls 12 auf, so dass bezogen auf die Längsachse L ein Formschluss bewirkt wird.

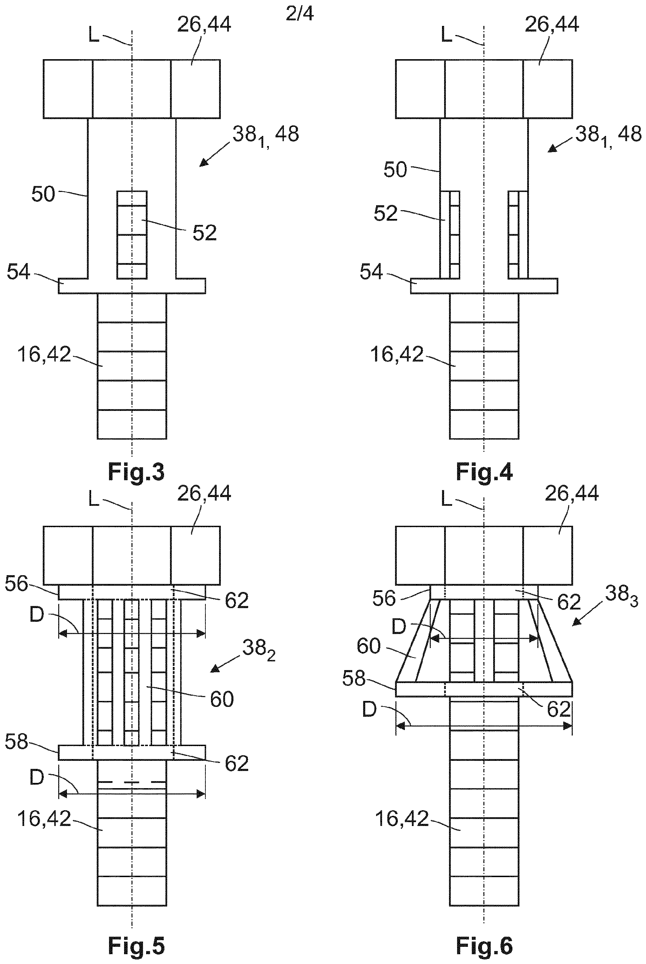

Weiterhin umfasst die Verbindungsanordnung 10₁ ein zweites Kraftübertragungselement 34, welches als eine zweite Mutter 36 ausgeführt und ebenfalls auf die Zugstange 16 aufgeschraubt ist. Im Gegensatz zum ersten Kraftübertragungselement 26 wirkt das zweite Kraftübertragungselement 34 nicht direkt auf eine zweite Oberfläche 37 des Airbag-Moduls 12. Zwischen der zweiten Oberfläche 37 und dem zweiten Kraftübertragungselement 34 ist ein Dämpfungselement 38₁ angeordnet, welches in den Figuren 3 und 4 vergrößert dargestellt ist und später genauer beschrieben wird. Zwischen dem Dämpfungselement 38₁ und dem zweiten Kraftübertragungselement 34 ist eine zweite Unterlegscheibe 40 angeordnet.

Löst der Airbag infolge eines Aufpralls des Fahrzeugs aus, so wirkt kurzzeitig eine erste Kraft auf das Airbag-Modul 12 und eine zweite, entgegengesetzt gerichtete Kraft auf das Trägerelement 14. Die Wirkrichtung dieser Kräfte ist mit dem Pfeil P gekennzeichnet. Die wirkenden Kräfte wollen das Airbag-Modul 12 vom Trägerelement 14 entfernen. Die wirkenden Kräfte werden über das erste und das zweite Kraftübertragungselement 26, 34 in die Zugstange 16 eingeleitet, die folglich auf Zug beansprucht wird. Dadurch, dass das Dämpfungselement 38₁ zwischen der zweiten Oberfläche 37 des Trägerelements 14 und der zweiten Unterlegscheibe 40 angeordnet ist, wird das Dämpfungselement 38₁ infolge der auf die Zugstange 16 wirkenden Zugkräfte auf Druck beansprucht und gestaucht. Wie später noch näher erläutert werden wird, ist das Dämpfungselement 38₁ so ausgestaltet, dass es sich verformen kann, so dass ein Teil der insbesondere beim Auslösen des Airbags wirkenden Kräfte und die hierdurch freiwerdende Energie in Verformungsenergie umgewandelt und damit vom Dämpfungselement 38₁ absorbiert wird. Folglich muss das Trägerelement 14 den vom Dämpfungselement 38₁ absorbierten Teil der wirkenden Kräfte nicht aufnehmen und wird entsprechend weniger belastet.

In Figur 2 ist ein zweites Ausführungsbeispiel der erfindungsgemäßen Verbindungsanordnung 10₂ ebenfalls anhand einer Prinzipskizze dargestellt. Der Aufbau des Airbag-Moduls 12 und des Trägerelements 14 entsprechen im Wesentlichen demjenigen nach Figur 1. In diesem Fall ist jedoch die Zugstange 16 als eine Schraube 42 mit einem Schraubenkopf 44 ausgeführt, wobei das Dämpfungselement 38₁ zwischen dem Schraubenkopf 44 und der ersten Oberfläche 32 des Airbag-Moduls 12 angeordnet ist. In diesem Fall wirkt der Schraubenkopf 44 als das erste Kraftübertragungselement 26. Das zweite Kraftübertragungselement 34 ist als eine Gewindebuchse 46 ausgeführt, welche innerhalb des Trägerelements 14, insbesondere des Schusskanals, angeordnet ist und an der zweiten Oberfläche 37 der Wandung des Trägerelements 14 anliegt. In diesem Fall sind keine Unterlegscheiben vorgesehen.

Die wirkenden Kräfte werden über den Schraubenkopf 44 und die erste Oberfläche 32 auf das Dämpfungselement 38₁ übertragen, welches infolgedessen auf Druck beansprucht wird und sich verformt. Infolge der Verformung absorbiert das Dämpfungselement 38₁ ein Teil der insbesondere beim Auslösen des Airbags auf das Trägerelement 14 und das Airbag-Modul 12 wirkenden Kräfte.

In den Figuren 3 und 4 ist das in den Figuren 1 und 2 gezeigte Dämpfungselement 38₁ gemäß einer ersten Ausführungsform vergrößert dargestellt, wobei in Figur 4 das Dämpfungselement 38₁ um 90° um die Längsachse L gegenüber der in Figur 3 gewählten Darstellung gedreht ist. In beiden Fällen ist das Dämpfungselement 38₁ auf die als die Schraube 42 ausgebildete Zugstange 16 aufgeschoben dargestellt. Das Dämpfungselement 38₁ ist als eine Hülse 48 ausgeführt, welche eine die Zugstange 16 umschließende Wandung 50 aufweist. Die Wandung 50 weist zwei Durchbrüche 52 auf, welche die Wandung 50 vollständig durchdringen. Die Durchbrüche 52 sind rechteckig geformt. Weiterhin weist die Hülse 48 an einem Ende eine plattenförmige, radial nach außen überstehende Anlagefläche 54 auf.

In Figur 5 ist eine zweite Ausführungsform des erfindungsgemäßen Dämpfungselements 38₂ dargestellt. Das Dämpfungselement 38₂ weist eine erste Scheibe 56 und eine zweite Scheibe 58 mit gleichem Durchmesser D auf, welche mit einer Anzahl von Stegen 60 miteinander verbunden sind, in diesem Fall mit sechs Stegen 60. Die Stege 60 verlaufen in etwa parallel zur Längsachse L des Dämpfungselements 38₂. Die beiden Scheiben 56, 58 weisen Durchgangsöffnungen 62 auf, durch welche die Schraube 42 durchgeführt werden kann.

In Figur 6 ist ein drittes Ausführungsbeispiel des erfindungsgemäßen Dämpfungselements 38₃ dargestellt, welches einen ähnlichen Aufbau wie das zweite Ausführungsbeispiel aufweist. Allerdings weisen die erste und die zweite Scheibe 56, 58 unterschiedliche Durchmesser D auf. Die Stege 60 verlaufen nicht parallel zur Längsachse L des Dämpfungselements 38₃, sondern sind geneigt. Gemäß dem dritten Ausführungsbeispiel umfasst das Dämpfungselement 38₃ vier Stege 60.

Infolge der insbesondere beim Auslösen des Airbags, aber auch im Betrieb des Fahrzeugs auftretenden Kräfte wird das Dämpfungselement 38 im Bereich der Durchbrüche 52 bzw. in den Stegen 60 verformt, wodurch ein Teil der Kräfte in Verformungsenergie umgewandelt und somit absorbiert wird.

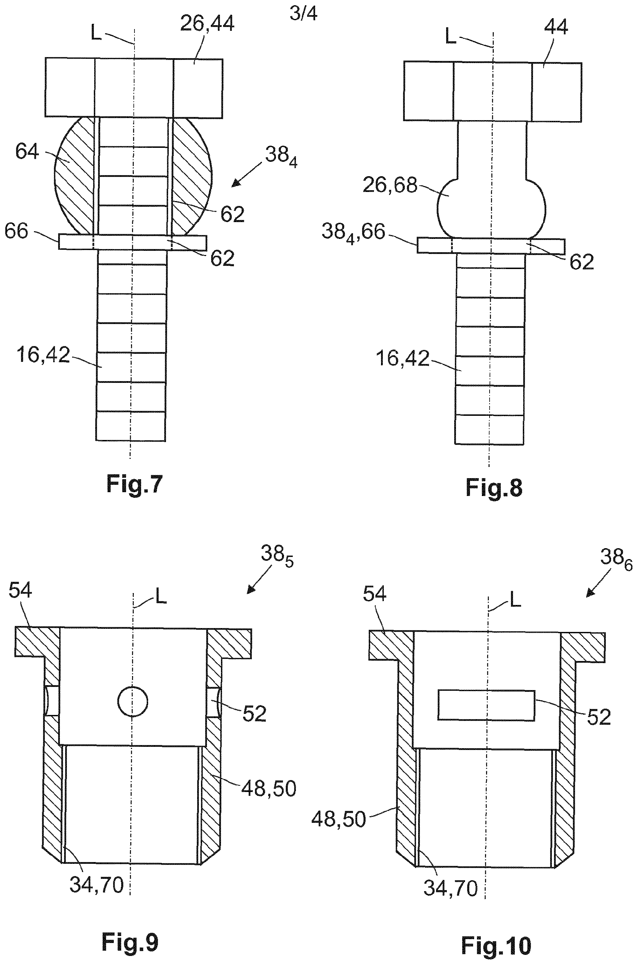

In Figur 7 ist ein viertes Ausführungsbeispiel des erfindungsgemäßen Dämpfungselements 38₄ dargestellt, welches einen kugelförmigen Dämpfungskörper 64 und eine an diesem anliegende ober befestige Verformungsscheibe 66 umfasst. Sowohl der Dämpfungskörper 64 als auch die Verformungsscheibe 66 weisen jeweils eine Durchgangsöffnung 62 auf, durch welche die Schraube 42 durchgeführt werden kann. Infolge der beim Auslösen des Airbags und im Betrieb des Fahrzeugs auftretenden Kräfte wird die Verformungsscheibe 66 gegen den kugelförmigen Dämpfungskörper 64 gedrückt und legt sich an die äußere Oberfläche des Dämpfungskörpers 64 an. Der Dämpfungskörper 64 wird zudem gestaucht.

In Figur 8 ist ein Ausführungsbeispiel eines erfindungsgemäßen ersten Kraftübertragungselements 26 dargestellt. Auch in diesem Fall ist die Zugstange 16 als Schraube 42 ausgeführt und weist an ihrem Schaft eine Ausbuchtung 68 auf. In diesem Fall stellt nicht der Schraubenkopf 44, sondern die Ausbuchtung 68 das erste Kraftübertragungselement 26 dar, an welcher sich das Dämpfungselement 38₄, beispielsweise die Verformungsscheibe 66, ähnlich wie beim in Figur 7 dargestellten kugelförmigen Dämpfungskörper 64 anlegen und verformen kann.

In Figur 9 ist ein fünftes Ausführungsbeispiel des erfindungsgemäßen Dämpfungselements 38₅ dargestellt, welches wie die in den Figuren 3 und 4 dargestellten Dämpfungselemente 38₁ als Hülse 48 ausgebildet ist. Allerdings weist das Dämpfungselement 38₅ insgesamt vier Durchbrüche 52 auf, welche kreisförmig ausgebildet sind. Zudem weist die Hülse 48 ein Innengewinde 70 auf, über welches die Hülse 48 auf ein Außengewinde 20 einer Schraube 42 oder einer Gewindestange 18 aufgeschraubt werden kann. Insofern werden die wirkenden Kräfte über das Außengewinde 20 in das Dämpfungselement 38₅ eingeleitet, so dass das Dämpfungselement 38₅ als eines der Kraftübertragungselemente 26, 34 wirkt. Das Innengewinde 70 erstreckt sich aber nicht vollständig entlang der Längsachse L der Hülse 48, sondern nur in etwa bis zur Hälfte. Die Durchbrüche 52 sind bezogen auf die Längsachse L beabstandet vom Innengewinde 70 angeordnet, so dass die Kraft über das Innengewinde 70 in die Hülse 48 eingeleitet wird und sich die Hülse 48 dort, wo sich die Durchbrüche 52 befinden, verformen kann. Die Hülse 48 verformt sich daher nicht im Bereich des Innengewindes 70, so dass die Krafteinleitung nicht durch eine Verformung im Bereich des Innengewindes 70 unterbrochen wird.

In Figur 10 ist ein sechstes Ausführungsbeispiel des erfindungsgemäßen Dämpfungselements 38₆ dargestellt, welches dem fünften Ausführungsbeispiel sehr ähnlich ist. Es unterscheidet sich im Wesentlichen nur darin vom fünften Ausführungsbeispiel, dass es zwei rechteckförmige Durchbrüche 52 aufweist.

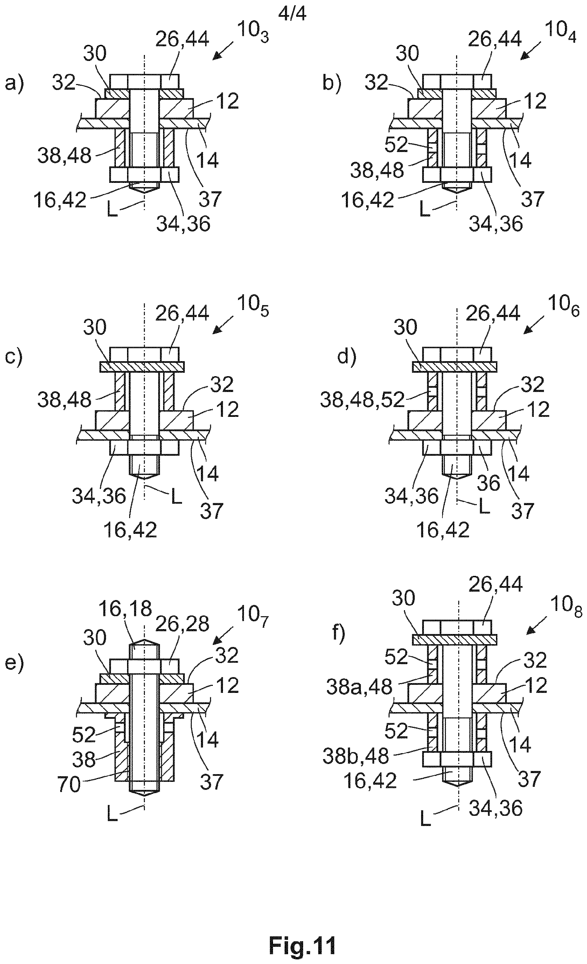

In den Figuren 11a) bis 11f) sind verschiedene Ausführungsformen der erfindungsgemäßen Verbindungsanordnung 10₃ bis 10₈ dargestellt, mit welchen ein Airbag-Modul 12 mit einem Trägerelement 14 eines Fahrzeugs verbunden werden kann. Aus Darstellungsgründen sind das Airbag-Modul 12 und das Trägerelement 14 nur ausschnittsweise dargestellt.

In Figur 11a) ist die Zugstange 16 als die Schraube 42 ausgeführt, wobei der Schraubenkopf 44 über die erste Unterlegscheibe 30 am Airbag-Modul 12 anliegt. Zwischen dem Trägerelement 14 und der auf die Schraube 42 aufgeschraubten zweiten Mutter 36 ist das Dämpfungselement 38 angeordnet, welche als Hülse 48 ausgeführt ist. Die Hülse 48 drückt auf die Oberfläche 37 des Trägerelements 14. In diesem Fall ist die Hülse 48 rohrförmig ausgestaltet und weist keine Durchbrüche oder Ausnehmungen auf, ist also sehr einfach aufgebaut. Um dem Dämpfungselement 38 die gewünschten Verformungseigenschaften zu geben, können die Wandstärke und das Material der Hülse 48 entsprechend gewählt werden.

Die in Figur 11b) dargestellte Ausführungsform der erfindungsgemäßen Verbindungsanordnung 10₁ unterscheidet sich nur dadurch von der in Figur 11a) dargestellten Ausführungsform, dass die Hülse 48 zwei Durchbrüche 52 aufweist.

In den Figuren 11c) und 11d) sind Verbindungsanordnungen 10₅ bis 10₆ dargestellt, welche dieselben Dämpfungselemente 38 aufweisen wie die Ausführungsformen gemäß den Figuren 11a) bzw. 11b). Allerdings sind die Dämpfungselemente 38 zwischen der ersten Unterlegscheibe 30 und der ersten Oberfläche 32 des Airbag-Moduls 12 angeordnet.

In der in Figur 11e) dargestellten Ausführungsform der Verbindungsanordnung 10₇ weist das Dämpfungselement 38 das Innengewinde 70 auf (vgl. Figuren 9 und 10), in welche die als Gewindestange 18 ausgebildete Zugstange 16 eingeschraubt ist. Eine zweite Mutter 36 wie in den in den Figuren 11a) und 11b) dargestellten Ausführungsbeispielen ist nicht erforderlich. Eine der ersten Muttern 28 dient als das erste Kraftübertragungselement 26 und ist auf die Gewindestange 18 aufgeschraubt.

In der in Figur 11f) dargestellten Ausführungsform umfasst die Verbindungsanordnung 10₈ zwei Dämpfungselemente 38, von denen ein erstes Dämpfungselement 38a zwischen dem ersten Kraftübertragungselement 26 und der ersten Oberfläche 32 des Airbag-Moduls 12 und ein zweites Dämpfungselement 38b zwischen dem zweiten Kraftübertragungselement 34 und der zweiten Oberfläche 37 des Trägerelements 14 angeordnet ist.

Nicht dargestellt ist der Fall, in welchem zwei Dämpfungselemente 38 zwischen dem ersten Kraftübertragungselement 26 und der ersten Oberfläche 32 des Airbag-Moduls 12 oder zwischen dem zweiten Kraftübertragungselement 34 und der zweiten Oberfläche 37 des Trägerelements 14 angeordnet sind.

Ebenfalls nicht dargestellt ist der Fall, dass die Zugstange 16 direkt in der Wandung des Airbag-Moduls 12 oder des Trägerelements 14 verankert ist. Dies kann beispielsweise dadurch geschehen, dass die Zugstange 16 bei der Herstellung umspritzt wird oder in der Wandung eine Gewindebohrung vorgesehen ist, in welche die insbesondere als Gewindestange 18 ausgeführte Zugstange 16 eingeschraubt werden kann. In diesem Fall dient die Wandung als eines der Kraftübertragungselements 26, 34. Da in diesem Fall kein separates Kraftübertragungselement 26, 34 vorhanden ist, kann auch von Kraftübertragungsabschnitten gesprochen werden.

### Bezugszeichenliste

- 10: Verbindungsanordnung
- 12: Airbag-Modul
- 14: Trägerelement
- 16: Zugstange
- 18: Gewindestange

- 20: Außengewinde
- 22: erste Durchgangsbohrung
- 24: zweite Durchgangsbohrung
- 26: erstes Kraftübertragungselement
- 28: erste Mutter

- 30: erste Unterlegscheibe
- 32: erste Oberfläche
- 34: zweites Kraftübertragungselement
- 36: zweite Mutter
- 37: zweite Oberfläche
- 38: Dämpfungselement

- 40: zweite Unterlegscheibe
- 42: Schraube
- 44: Schraubenkopf
- 46: Gewindebuchse
- 48: Hülse

- 50: Wandung
- 52: Durchbruch
- 54: Anlageflächen
- 56: erste Scheibe
- 58: zweite Scheibe
- 60: Steg
- 62: Durchgangsöffnung
- 64: Dämpfungskörper
- 66: Verformungsscheibe
- 68: Ausbuchtung

- 70: Innengewinde

- D: Durchmesser
- L: Längsachse
- P: Pfeil

## Patentansprüche

1. Verbindungsanordnung zum Verbinden eines einen auslösbaren Airbag aufnehmenden Airbag-Moduls (12) mit einem Trägerelement (14) eines Fahrzeugs, umfassend
- eine Zugstange (16),
- ein mit dem Airbag-Modul (12) und der Zugstange (16) zusammenwirkendes erstes Kraftübertragungselement (26),
- ein mit dem Trägerelement (14) und der Zugstange (16) zusammenwirkendes zweites Kraftübertragungselement (34),
- wobei die Zugstange (16) und das erste und das zweite Kraftübertragungselement (26, 34) zum Verbinden des Airbag-Moduls (12) mit dem Trägerelement (14) angeordnet sind, und
- zumindest ein verformbares Dämpfungselement (38), welches mit der Zugstange (16), dem ersten Kraftübertragungselement (26) und/oder dem zweiten Kraftübertragungselement (34) zum Absorbieren der zwischen dem Airbag-Modul (12) und dem Trägerelement (14) wirkenden Kräfte zusammenwirkt, **dadurch gekennzeichnet, dass**
- das Dämpfungselement (38) als eine die Zugstange (16) umschließende Hülse (48) ausgeführt ist und die Hülse (48) eine Wandung aufweist, welche eine oder mehrere Durchbrüche (52) und/oder Ausnehmungen umfasst, oder
- das Dämpfungselement (38) einen die Zugstange (16) umschließende kugelförmigen Dämpfungskörper (64) und eine an diesem anliegende oder befestigte, die Zugstange (16) umschließende Verformungsscheibe (66) aufweist, oder
- das Dämpfungselement (38) eine die Zugstange (16) umschließende erste Scheibe (56) und eine die Zugstange (16) umschließende zweite Scheibe (58) aufweist, wobei die erste und die zweite Scheibe (56, 58) mit einer Anzahl von Stegen (60) verbunden sind.

2. Verbindungsanordnung nach Anspruch 1,
**dadurch gekennzeichnet, dass**
- das erste Kraftübertragungselement (26) und das zumindest eine Dämpfungselement (38) oder
- das zweite Kraftübertragungselement (34) und das zumindest eine Dämpfungselement (38) zu einem Bauteil zusammengefasst sind, oder
- das erste Kraftübertragungselement (26) und ein erstes Dämpfungselement (38) sowie
- das zweite Kraftübertragungselement (34) und ein zweites Dämpfungselement (38) zu jeweils einem Bauteil zusammengefasst sind.

3. Verbindungsanordnung nach einem der vorherigen Ansprüche, **dadurch gekennzeichnet, dass** die Zugstange (16) ein Außengewinde (20) und die Hülse (48) ein zum Außengewinde (20) korrespondierendes Innengewinde (70) aufweist, wobei das Innengewinde (70) beabstandet von den Durchbrüchen (52) und/oder Ausnehmungen angeordnet ist.

4. Verbindungsanordnung nach einem der vorherigen Ansprüche, **dadurch gekennzeichnet, dass** die Zugstange (16) als eine Schraube (42) mit einem Außengewinde (20) und einem als Schraubenkopf (44) ausgebildeten ersten Kraftübertragungselement (26) ausgeführt ist, wobei die Hülse (48) ein zum Außengewinde (20) korrespondierendes Innengewinde (70) aufweist und das Innengewinde (70) beabstandet von den Durchbrüchen (52) und/oder Ausnehmungen angeordnet ist.

5. Verbindungsanordnung nach einem der vorherigen Ansprüche, **dadurch gekennzeichnet, dass** die Stege (60) in Bezug auf die erste Scheibe (56) und die zweite Scheibe (58) geneigt verlaufen.

6. Verbindungsanordnung nach einem der vorherigen Ansprüche **dadurch gekennzeichnet, dass** die Zugstange (16) ein Gewinde aufweist und das erste und zweite Kraftübertragungselement (26, 34) als Muttern (28, 36) oder Gewindebuchsen (46) ausgeführt sind.

7. Verbindungsanordnung nach einem der vorherigen Ansprüche, **dadurch gekennzeichnet, dass** die Zugstange (16) als eine Schraube (42) mit einem Außengewinde (20) und einem als Schraubenkopf (44) ausgebildeten ersten Kraftübertragungselement (26) und das zweite Kraftübertragungselement (34) als Muttern (36) oder Gewindebuchsen (46) ausgeführt ist.

8. Verbindungsanordnung nach einem der vorherigen Ansprüche, **dadurch gekennzeichnet, dass**
- die Zugstange (16) ein Außengewinde (20) aufweist oder als eine Schraube (42) mit einem Außengewinde (20) ausgeführt ist, wobei
- das erste Kraftübertragungselement (26) als eine mit dem Dämpfungselement (38) zusammenwirkende Ausbuchtung (68) der Zugstange (16) und
- das zweite Kraftübertragungselement (34) als Mutter (36) ausgeführt sind.

9. Dämpfungselement (38) zur Verwendung in einer Verbindungsanordnung nach einem der vorherigen Ansprüche zum Verbinden eines einen auslösbaren Airbag aufnehmenden Airbag-Moduls (12) mit einem Trägerelement (14) eines Fahrzeugs, **dadurch gekennzeichnet, dass** das Dämpfungselement (38)
- als eine Hülse (48) mit einer Wandung ausgebildet ist, welche eine oder mehrere Durchbrüche (52) und/oder Ausnehmungen aufweist, oder
- als eine Hülse (48) mit einer Wandung ausgebildet ist, welche eine oder mehrere Durchbrüche (52) und/oder Ausnehmungen und die Hülse (48) ein Innengewinde (70) aufweist, wobei das Innengewinde (70) beabstandet von den Durchbrüchen (52) und/oder Ausnehmungen angeordnet ist, oder
- einen kugelförmige Dämpfungskörper (64) und eine an dieser anliegende oder befestigte Verformungsscheibe (66) aufweist, die jeweils eine Durchgangsöffnung aufweisen, oder
- eine erste Scheibe (56) und eine zweite Scheibe (58) mit jeweils einer Durchgangsöffnung aufweist, wobei die erste und die zweite Scheibe (56, 58) mit einer Anzahl von Stegen (60) verbunden sind.

## Claims

1. Connecting arrangement for connecting an airbag module (12) housing a deployable airbag to a support element (14) of a vehicle, comprising
- a traction rod (16),
- a first force transmitting element (26) co-operating with the airbag module (12) and the traction rod (16),
- a second force transmitting element (34) co-operating with the support element (14) and the traction rod (16),
- wherein the traction rod (16) and the first and the second force transmitting elements (26, 34) are arranged in order to connect the airbag module (12) to the support element (14), and
- at least one deformable damping element (38), which cooperates with the traction rod (16), the first force transmitting element (26) and/or the second force transmitting element (34) for absorbing the forces acting between the airbag module (12) and the support element (14), **characterised in that**
- the damping element (38) is designed as a sleeve (48) surrounding the traction rod (16) and the sleeve (48) has a wall which comprises one or more through openings (52) and/or recesses, or
- the damping element (38) has a spherical damping member (64) surrounding the traction rod (16) and a deformable disc (66) which surrounds the traction rod (16) and rests on or is fastened to the damping member, or
- the damping element (38) has a first disc (56) surrounding the traction rod (16) and a second disc (58) surrounding the traction rod (16), wherein the first and the second discs (56, 58) are connected to a plurality of webs (60) .

2. Connecting arrangement according to claim 1, **characterised in that**
- the first force transmitting element (26) and the at least one damping element (38) or
- the second force transmitting element (34) and the at least one damping element (38) are combined into one component, or
- the first force transmitting element (26) and a first damping element (38) and
- the second force transmitting element (34) and a second damping element (38) are in each case combined into one component.

3. Connecting arrangement according to one of the preceding claims, **characterised in that** the traction rod (16) has an external thread (20) and the sleeve (48) has an internal thread (70) corresponding to the external thread (20), wherein the internal thread (70) is arranged spaced apart from the through openings (52) and/or recesses.

4. Connecting arrangement according to one of the preceding claims, **characterised in that** the traction rod (16) is configured as a screw (42) with an external thread (20) and a first force transmitting element (26) designed as a screw head (44), wherein the sleeve (48) has an internal thread (70) corresponding to the external thread (20), and the internal thread (70) is arranged spaced apart from the through openings (52) and/or recesses.

5. Connecting arrangement according to one of the preceding claims, **characterised in that** the webs (60) extend obliquely in relation to the first disc (56) and the second disc (58).

6. Connecting arrangement according to one of the preceding claims, **characterised in that** the traction rod (16) has a thread and the first and second force transmitting element (26, 34) are configured as nuts (28, 36) or threaded bushes (46) .

7. Connecting arrangement according to one of the preceding claims, **characterised in that** the traction rod (16) is configured as a screw (42) with an external thread (20) and a first force transmitting element (26) designed as a screw head (44), and the second force transmitting element (34) is configured as nuts (36) or threaded bushes (46).

8. Connecting arrangement according to one of the preceding claims, **characterised in that**
- the traction rod (16) has an external thread (20) or is configured as a screw (42) with an external thread (20), wherein
- the first force transmitting element (16) is configured as a convexity (68) of the traction rod (16) co-operating with the damping element (38), and
- the second force transmitting element (34) is configured as a nut (36).

9. Damping element (38) for use in a connecting arrangement according to one of the preceding claims for connecting an airbag module (12) housing a deployable airbag to a support element (14) of a vehicle, **characterised in that** the damping element (38)
- is designed as a sleeve (48) with a wall which has one or more through openings (52) and/or recesses exhibits, or
- is designed as a sleeve (48) with a wall which has one or more through openings (52) and/or recesses and the sleeve (48) has an internal thread (70), wherein the internal thread (70) is arranged spaced apart from the through openings (52) and/or recesses, or
- has a spherical damping member (64) and a deformable disc (66) which rests on or is fastened to the damping member, each having a through opening, or
- has a first disc (56) and a second disc (58) each having a through opening, wherein the first and the second discs (56, 58) are connected to a plurality of webs (60).

## Revendications

1. Dispositif de liaison permettant de relier un module d'airbag (12) recevant un airbag pouvant être déclenché à un élément de support (14) d'un véhicule comprenant :
- une tige de traction (16),
- un premier élément de transmission de force (26) coopérant avec le module d'airbag (12) et avec la tige de traction (16),
- un second élément de transmission de force (34) coopérant avec l'élément de support (14) et avec la tige de traction (16),
- la tige de traction (16) ainsi que le premier élément de transmission de force et le second élément de translation de force (26, 34) étant montés de façon à relier le module d'airbag (12) à l'élément de support (14), et
- au moins un élément d'amortissement déformable (38) qui coopère avec la tige de traction (16), le premier élément de transmission de force (26) et/ou le second élément de transmission de force (34) pour permettre d'absorber les forces agissant entre le module d'airbag (12) et l'élément de support (14),
**caractérisé en ce que**
- l'élément d'amortissement (38) est réalisé sous la forme d'un manchon (48) entourant la tige de traction (16), et le manchon (48) a une paroi qui comporte au moins une ouverture (52) et/ou un évidement, ou
- l'élément d'amortissement (38) comporte un corps d'amortissement en forme de sphère (64) entourant la tige de traction (16) et un disque de déformation (66) s'appliquant sur celui-ci ou fixé à celui-ci et entourant la tige de traction (16), ou
- l'élément d'amortissement (38) comporte un premier disque (56) entourant la tige de traction (16) et un second disque (58) entourant la tige de traction (16), le premier disque et le second disque (56, 58) étant reliés à un ensemble de traverses (60).

2. Dispositif de liaison conforme à la revendication 1, **caractérisé en ce que**
- le premier élément de transmission de force (26) et l'élément d'amortissement (38), ou
- le second élément de transmission de force (34) et l'élément d'amortissement (38),
sont rassemblés en un composant, ou
- le premier élément de transmission de force (26) et un premier élément d'amortissement (38), et
- le second élément de transmission de force (34) et un second élément sont respectivement rassemblés en un composant d'amortissement (38).

3. Dispositif de liaison conforme à l'une des revendications précédentes,
**caractérisé en ce que**
la tige de traction (16) comporte un filetage externe (20) et le manchon (48) comporte un filetage interne (70) correspondant à ce filetage externe (20), et le filetage interne (70) est situé à distance des ouvertures (52) et/ou des évidements.

4. Dispositif de liaison conforme à l'une des revendications précédentes,
**caractérisé en ce que**
la tige de traction (16) est réalisée sous la forme d'une vis (42) comportant un filetage externe (20) et un premier élément de transmission de force (26) réalisé sous la forme d'une tête de vis (44), et le manchon (48) comporte un filetage interne (70) correspondant à ce filetage externe (20) et situé à distance des ouvertures (52) et/ou des évidements.

5. Dispositif de liaison conforme à l'une des revendications précédentes,
**caractérisé en ce que**
les traverses (60) sont inclinées par rapport au premier disque (56) et au second disque (58).

6. Dispositif de liaison conforme à l'une des revendications précédentes,
**caractérisé en ce que**
la tige de traction (16) comporte un filetage et le premier élément de transmission de force et le second élément de transmission de force (26, 34) sont réalisés sous la forme d'écrous (28, 36) ou de douilles filetées (46).

7. Dispositif de liaison conforme à l'une des revendications précédentes,
**caractérisé en ce que**
la tige de traction (16) est réalisée sous la forme d'une vis (42) comprenant un filetage externe (20) et un premier élément de transmission de force (26) réalisé sous la forme d'une tête de vis (44) et le second élément de transmission de force (34) est réalisé sous la forme d'écrous (36) ou de douilles filetées (46).

8. Dispositif de liaison conforme à l'une des revendications précédentes,
**caractérisé en ce que**
- la tige de traction (16) comporte un filetage externe (20) ou est réalisée sous la forme d'une vis (42) comportant un filetage externe (20),
- le premier élément de transmission de force (26) est réalisé sous la forme d'un bossage (68) de la tige de traction (16) coopérant avec l'élément d'amortissement (38), et
- le second élément de transmission de force (34) est réalisé sous la forme d'un écrou (36).

9. Elément d'amortissement (38) destiné à être utilisé dans un dispositif de liaison conforme à l'une des revendications précédentes,
pour permettre de relier un module d'airbag (12) recevant un airbag susceptible d'être déclenché à un élément de support (14) d'un véhicule,
**caractérisé en ce que**
cet élément d'amortissement (38),
- est réalisé sous la forme d'un manchon (48) ayant une paroi qui comporte au moins une ouverture (52) et/ou au moins un évidement, ou
- est réalisé sous la forme d'un manchon (48) ayant une paroi qui comporte au moins une ouverture (52) et/ou au moins un évidement, et le manchon (48) comporte un filetage interne (70), situé à distance de l'ouverture (52) et/ou de l'évidement, ou
- comporte un corps d'amortissement en forme de sphère (64) et un disque de déformation (66) appliqué ou fixé sur celui-ci et qui comportent respectivement une ouverture de passage, ou
- comporte un premier disque (56) et un second disque (58) ayant respectivement une ouverture de passage, le premier disque et le second disque (56, 58) étant reliés avec un ensemble de traverses (60).
